(19) Europäisches Patentamt
European Patent Office
Office européen des brevets

(11) EP 4 729 587 A1

(12) **EUROPEAN PATENT APPLICATION**
published in accordance with Art. 153(4) EPC

(43) Date of publication:
**22.04.2026 Bulletin 2026/17**

(21) Application number: **24825604.2**

(22) Date of filing: **14.05.2024**

(51) International Patent Classification (IPC):
***C09D 153/00*** *(2006.01)* ***C08F 8/00*** *(2006.01)*
***C08F 220/10*** *(2006.01)* ***C09D 133/14*** *(2006.01)*

(52) Cooperative Patent Classification (CPC):
**C08F 8/00; C08F 220/10; C09D 133/14; C09D 153/00**

(86) International application number:
**PCT/JP2024/017799**

(87) International publication number:
**WO 2024/262195 (26.12.2024 Gazette 2024/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.06.2023 JP 2023099953**
**14.09.2023 JP 2023149334**

(71) Applicant: **JNC Corporation**
**Chiyoda-ku**
**Tokyo 100-8105 (JP)**

(72) Inventor: **TAMURA, Norio**
**Ichihara-shi, Chiba 290-8551 (JP)**

(74) Representative: **Becker, Eberhard**
**Becker Kurig & Partner**
**Patentanwälte mbB**
**Bavariastraße 7**
**80336 München (DE)**

# (54) BLOCK COPOLYMER, COMPOSITION, AND ARTICLE USING SAME

(57) Provided is a feature capable of improving coating properties and adhesion to objects to be coated such as base substrates while having high water repellency, using a material that either does not contain fluorine therein or has excluded as much fluorine as possible.

The present invention is a block copolymer, one of the blocks comprising structural units containing a structural unit represented by formula (1), and the presence ratio of the structural units constituting this block is a molar ratio of 0.05 to 0.7 with respect to the structural units constituting the entire block copolymer.

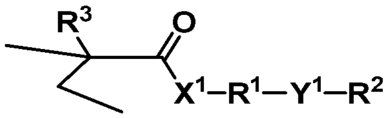

**(1)**

(In the formula, $X^1$ is -O- or -NH-, $R^1$ is an alkylene or phenylene with 2 to 12 carbon atoms, $Y^1$ is -NHCOO- or -NHCONH-, $R^2$ is a linear, branched, or cyclic hydrocarbon group with 6 to 30 carbon atoms, and the hydrocarbon group may include -O- or an unsaturated bond. The hydrogen on a carbon two or more positions away from $Y^1$ may be replaced with fluorine in this hydrocarbon group. $R^3$ is hydrogen or methyl.)

EP 4 729 587 A1

## Description

Technical Field

The invention relates to a block copolymer, a composition, and an article using the same that are suitably used for a liquid repellent coating material that does not contain or has reduced per and polyfluoroalkyl substances (PFAS).

Related Art

PFAS, which has been used in many applications as a water and oil repellent material, is being increasingly regulated in various countries as a substance harmful to the human body and environment. Therefore, there is a growing demand for materials that exhibit the properties of such water and oil repellent materials without containing fluorine. As such materials, for example, a polymer disclosed in Patent Document 1 has been reported. The prior art document discloses that packing (crystallinity) of a long-chain alkyl contributes to liquid repellent performance. Additionally, Non-Patent Document 1, etc., has been published as a material in which such long-chain alkyl undergoes packing (crystallization). Furthermore, even for a fluorine-containing surface treatment agent, a polymer disclosed in Patent Document 2 have been reported as a material with a lower environmental impact.

Patent Document 1 and Patent Document 2 provide evaluations regarding the liquid repellency of materials. However, to sufficiently exhibit liquid repellency and prevent deterioration, it is necessary to improve the coatability and adhesion to objects such as base materials, that impart solvent solubility or coatability.

[Prior Art Document(s)]

[Patent Document(s)]

[Patent Document 1] Japanese Patent Application Laid-open No. 2022-159191
[Patent Document 2] Japanese patent Application Laid-open No. 2011-523432

[Non-patent Document(s)]

[Non-patent Document 1] "In-plane oriented highly ordered lamellar structure formation of poly(N-dodecylacrylamide) induced by humid annealing", RSC Advance, 2017, Vol. 7, pp. 6631.

SUMMARY OF INVENTION

Technical Problem

The invention discloses a technology that can improve coatability and adhesion to coating targets such as base materials, while having high liquid repellent performance by using materials that do not contain fluorine or exclude fluorine as much as possible.

Solution to Problem

As a result of intensive studies, the inventors found that a block copolymer having a structural unit of a specific structure satisfies the desired properties as the above, and completed the invention. That is, the invention is as follows.

[1] In a block copolymer, one block is a block containing structural units including a structural unit represented by formula (1), and an abundance ratio of the structural units forming the block is 0.05 to 0.7 in molar ratio relative to structural units forming an entirety of the block copolymer.

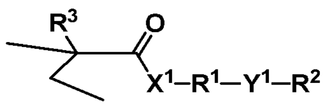

(1)

($X^1$ is -O- or -NH-, $R^1$ is alkylene having 2 to 12 carbon atoms or phenylene, $Y^1$ is -NHCOO- or -NHCONH-, $R^2$ is a linear hydrocarbon group having 6 to 30 carbon atoms, a branched hydrocarbon group having 6 to 30 carbon atoms, or

a cyclic hydrocarbon group having 6 to 30 carbon atoms, the hydrocarbon group is able to contain -O- or an unsaturated bond, and in the hydrocarbon group, hydrogen on carbon atoms two or more positions away from $Y^1$ is replaceable with fluorine, and $R^3$ is hydrogen or methyl.)

[2] In the block copolymer according to [1], $R^3$ is hydrogen.

[3] In the block copolymer according to [1] or [2], $Y^1$ is -NHCONH-.

[4] In the block copolymer according to any one of [1] to [3], $R^2$ is an alkyl group having 6 to 30 carbon atoms and not containing fluorine.

[5] The block copolymer according to any one of [1] to [4] includes, as another block, a block formed by (meth)acrylic acid ester.

[6] A composition includes: the block copolymer according to any one of [1] to [5]; and a solvent.

[7] The composition according to [6] includes: a precipitate of aggregates of the block copolymer.

[8] In an article, the composition according to [6] or [7] is coated to a base material, and the solvent is removed.

Effects of Invention

According to the invention, it is possible to provide a material with low environmental impact that contains as little fluorine as possible in the material, and that excels in coatability and adhesion to coating targets such as base materials, in addition to high liquid repellent performance.

BRIEF DESCRIPTION OF DRAWINGS

[FIG. 1] FIG. 1 is a photograph of a film prepared on a glass substrate by using Composition 1 of [Example 42]. Here, the width of the photograph is about 1 μm.

[FIG. 2] FIG. 2 is a photograph of a film prepared on a glass substrate by using a composition containing a homopolymer of [Comparative Example 1]. Here, the width of the photograph is about 1 μm.

DESCRIPTION OF EMBODIMENTS

Hereinafter, the embodiments of the invention will be described in detail, but the following description is an example (representative example) of embodiments of the invention, and the invention is not limited to these contents in any way. Moreover, embodiments of the invention can also be appropriately combined.

The block copolymer of the invention exhibits the properties of being a block copolymer in which one of the blocks is a block formed by structural units including a structural unit represented by formula (1). In the block copolymer, the block formed by the structural units including the structural unit represented by formula (1) exhibits liquid repellent performance. From the viewpoints of expressing liquid repellent performance, coatability and adhesion, the abundance ratio of the structural unit forming the block is, in molar ratio, on average 0.05 to 0.7, preferably 0.1 to 0.5, and more preferably 0.1 to 0.4, relative to the structural units forming the entire block copolymer.

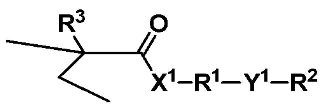

(1)

(In the formula, $X^1$ is -O- or -NH-, $R^1$ is alkylene having 2 to 12 carbon atoms or phenylene, $Y^1$ is -NHCOO- or -NHCONH-, $R^2$ is a linear hydrocarbon group having 6 to 30 carbon atoms, a branched hydrocarbon group having 6 to 30 carbon atoms, or a cyclic hydrocarbon group having 6 to 30 carbon atoms. The hydrocarbon group may contain -O- or an unsaturated bond, and in the hydrocarbon group, the hydrogen on a carbon atom two or more positions away from $Y^1$ may be replaced with fluorine, and $R^3$ is hydrogen or methyl.)

In the structural unit represented by formula (1), $R^3$ is preferably hydrogen for expressing liquid repellent performance. For the same reason, $Y^1$ is preferably -NHCONH-.

$R^2$ is a linear hydrocarbon group having 6 to 30 carbon atoms, a branched hydrocarbon group having 6 to 30 carbon atoms, or a cyclic hydrocarbon group having 6 to 30 carbon atoms, and the hydrocarbon group may contain -O- or an unsaturated bond. At this time, for expressing the liquid repellent performance, it is preferable to contain linear alkyl having 6 or more carbon atoms. In the selection of the hydrocarbon group, in the case of repelling water or hydrocarbon compounds, $R^2$ preferably contains linear alkyl having 12 or more carbon atoms. When the hydrocarbon group contains -O-, considering compound stability, $CH_3$-O-$CH_2$-O- where oxygen atoms are not adjacent is preferable over $CH_3$-O-O-$CH_2$- where oxygen atoms are adjacent.

To obtain desired liquid repellent performance, hydrogen on a carbon atom of the hydrocarbon group of $R^2$ may be replaced with fluorine. The position to be replaced is hydrogen on a carbon atom two or more positions away from $Y^1$. At this time, to reduce environmental impact by using as little fluorine as possible, which is the aim of the invention, it is preferable that hydrogen on a carbon atom at a position more distant from $Y^1$ is replaced. It is most preferable the hydrogen on the carbon atom at the terminal position opposite to $Y^1$ is replaced.

Preferable examples of the structural unit represented by formula (1) may include the structures represented by the following formulas (1-1) to (1-29).

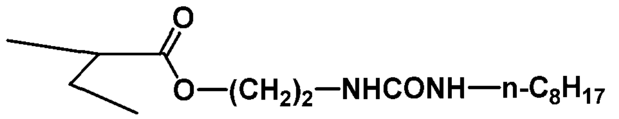

**(1-1)**

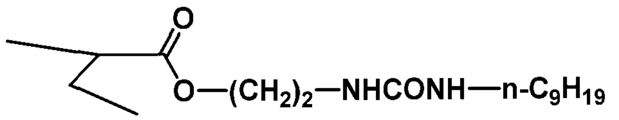

**(1-2)**

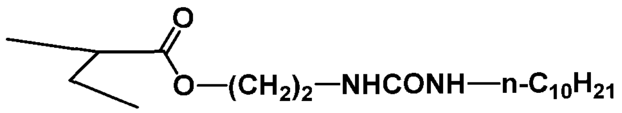

**(1-3)**

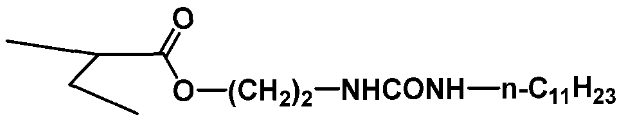

**(1-4)**

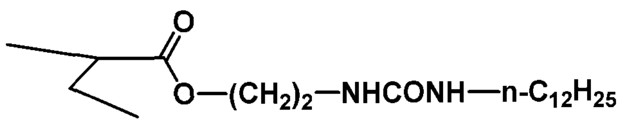

**(1-5)**

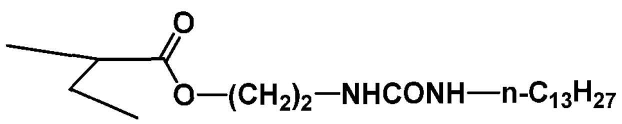

**(1-6)**

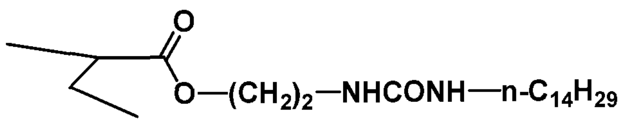

**(1-7)**

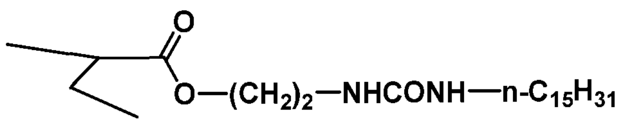

**(1-8)**

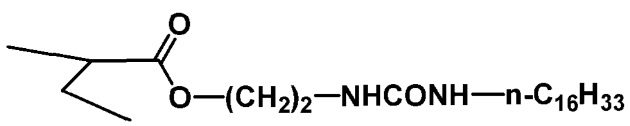

**(1-9)**

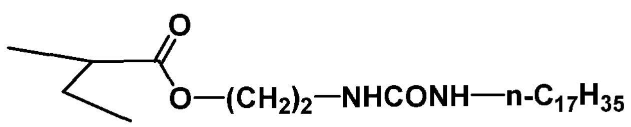

**(1-10)**

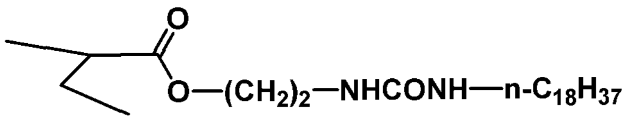

(1-11)

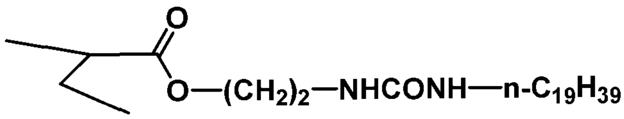

(1-12)

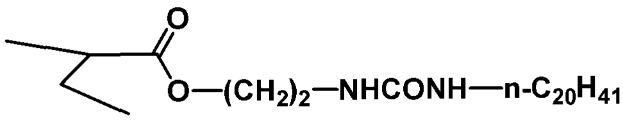

(1-13)

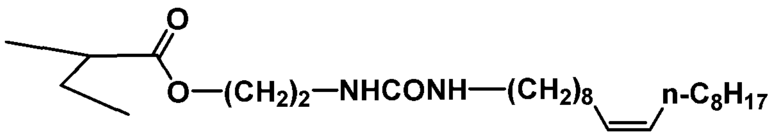

(1-14)

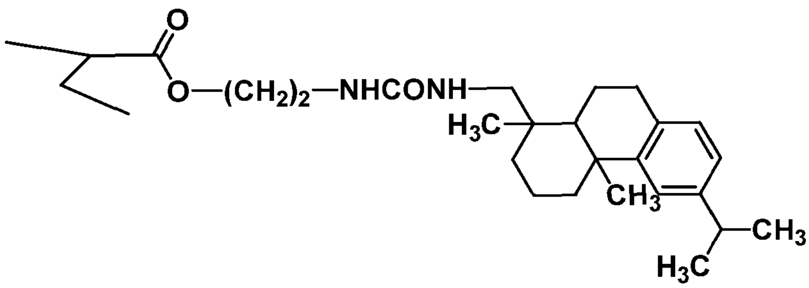

(1-15)

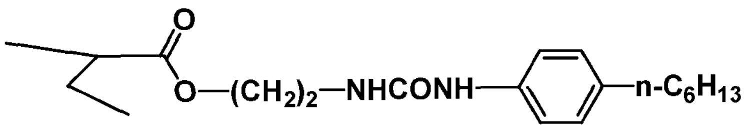

(1-16)

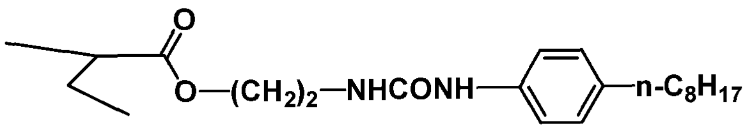

(1-17)

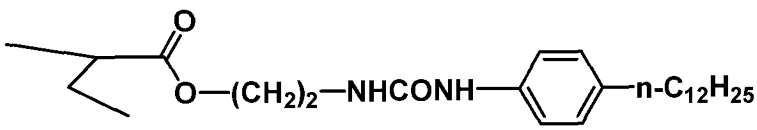

(1-18)

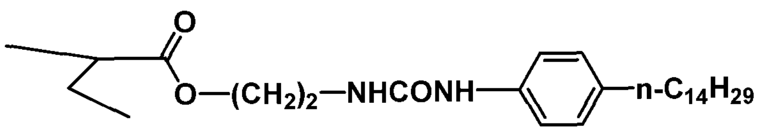

(1-19)

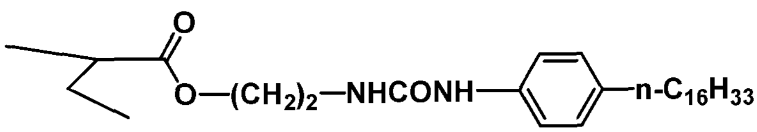

(1-20)

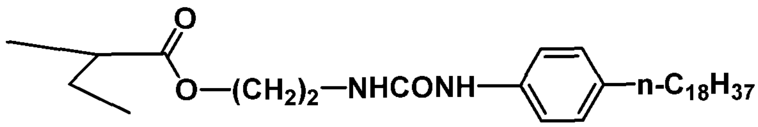
(1-21)

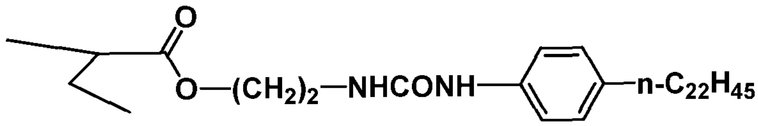
(1-22)

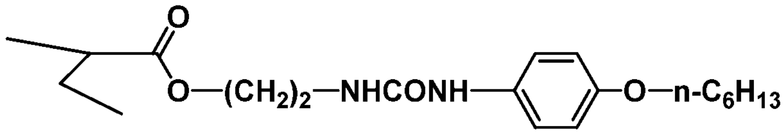
(1-23)

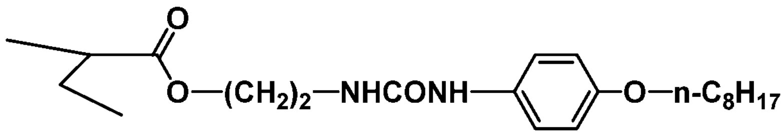
(1-24)

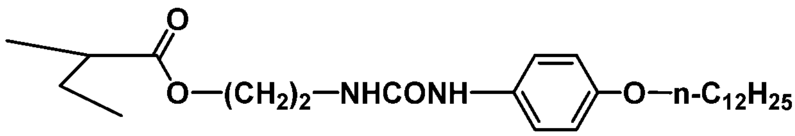
(1-25)

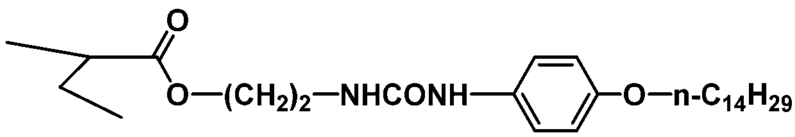
(1-26)

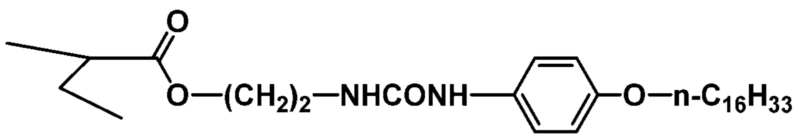
(1-27)

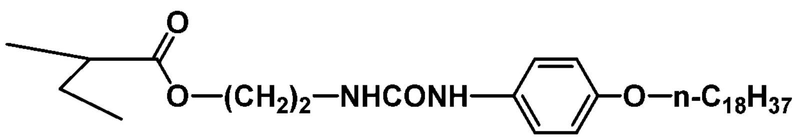
(1-28)

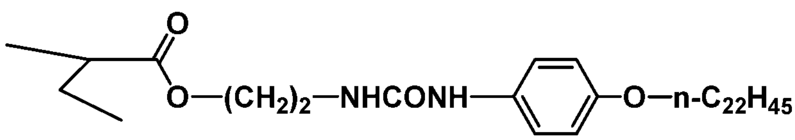
(1-29)

A block formed by the structural units including the structural unit represented by formula (1) (hereinafter sometimes referred to as block (A)) may be formed by multiple types of structural units represented by formula (1) to obtain desired liquid repellent performance. At this time, to improve liquid repellent performance and reduce environmental impact, one of fluorine-free and fluorine-containing alkyl groups for $R^2$ may be selected.

The block formed by the structural units including the structural unit represented by formula (1) may contain a small number of structural units other than the structural unit represented by formula (1). At this time, the structural units other than the structural unit represented by formula (1) preferably have an average ratio of 0.2 or less as a ratio of the number of structural units to the total structural units of block (A). At this time, to maintain liquid repellent performance, 0.15

or less is more preferable, and 0.1 or less is even more preferable. The preferable lower limit value of the ratio of the number of structural units is 0.01, a more preferable lower limit value is 0.001, and an even more preferable lower limit value is 0. Also, from the ease of manufacturing the block copolymer of the invention, the structural unit other than the structural unit represented by formula (1) is preferably a structural unit having a structure derived from a precursor before the structural unit represented by formula (1) is obtained, and is specifically a structural unit having a structure represented by formula (1-p) as follows.

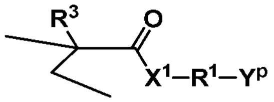

(1-p)

(In the formula, $X^1$ is -O- or -NH-, $R^1$ is alkylene having 2 to 12 carbon atoms or phenylene, $R^3$ is hydrogen or methyl, and $Y^p$ is -NCO or protected -NCO.)

In the block copolymer of the invention, there is no limitation on the configuration of blocks other than block (A). That is, there is no limitation on the configuration of blocks (may be hereinafter referred to as blocks (B)) other than the block formed by structural units including the structural unit represented by formula (1). The block copolymer in which one of the blocks is a block formed by the structural units including the structural unit represented by formula (1) may be an AB diblock copolymer formed by block (A) and block (B), or may be an ABA triblock copolymer formed by block (A), block (B), and block (A). At this time, to obtain desired properties while easily producing the block copolymer, an AB diblock copolymer is preferable.

In the block copolymer of the invention, there is no limitation on the selection of the block other than the block formed by structural units including the structural unit represented by formula (1), that is, the block (B). However, to exhibit the liquid repellent performance in the block copolymer of the invention, in the case where a polymer formed by only the structural units represented by formula (1) constituting block (A) is designated as A', and a polymer formed by only structural units other than those represented by formula (1) constituting the other block (B) is designated as B', it is preferable to make a selection that satisfies the following relationship. Surface tension of A' > Surface tension of B'

In the block copolymer of the invention, block (B) relates to solvent solubility, coatability, and adhesion to coating targets such as base materials. To impart such properties, it is preferable to select a structural unit represented by formula (2) in the following as the structural unit forming block (B).

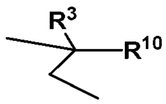

(2)

(In formula (2), $R^3$ is hydrogen or methyl, and $R^{10}$ is a group selected from structures represented by the following formulas (20) to (23), pyridyl, or -CN.)

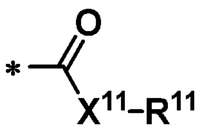

(20)

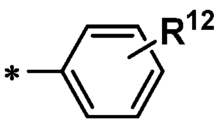

(21)

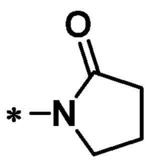

(22)

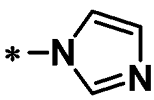

(23)

In formulas (20) to (23), $X^{11}$ is -O-, -NH-, or -$NR^{11}$-, $R^{11}$ is hydrogen, linear alkyl having 1 to 8 carbon atoms, branched alkyl having 3 to 8 carbon atoms, cyclic alkyl having 3 to 8 carbon atoms, or phenyl, non-adjacent -$CH_2$- of the alkyl may be replaced with -O-, -NMe-, or -$NMe_2^+$-, -$CH_2$-of the alkyl may be replaced with -CO-, hydrogen on non-adjacent carbons of alkyl may be replaced with -OH or -$N(CH_3)_2$, -$CH_3$ of alkyl may be replaced with -$CO_2H$, -$CO_2^-$, -$SO_3^-$, or - $SO_3K$, $R^{12}$ is -H, -$CH_3$, -$OCH_3$, -OH, -$CO_2H$, -$OCOCCH_3$, -$N(CH_3)_2$, or -$SO_3Na$, Me is methyl, and * represents a bonding site.)

To improve the solvent solubility and coatability of the block copolymer of the invention, it is preferable to select -O- or -$NR^{11}$- as $X^{11}$ in formula (20), and short-chain linear alkyl having about 1 to 4 carbon atoms as $R^{11}$. For the same purpose, it is preferable to select hydrogen, methyl, or methoxy as $R^{11}$ in formula (20). To improve the adhesion of the block copolymer of the invention to the coating targets such as base materials, it is preferable to select -O- or -NH- as $X^{11}$ in formula (20), and alkyl in which -$CH_2$- is replaced with -CO- and alkyl in which hydrogen on non-adjacent carbons are replaced with -OH as $R^{11}$ in formula (20). For the same purpose, it is preferable to select -OH as $R^{12}$ in formula (21).

To improve solvent solubility, coatability, and adhesion, in the block copolymer of the invention, it is more preferable to select the structural unit that forms block (B) from multiple structural units selected from the combinations of the structural units represented by formula (2) and the groups having structures represented by formula (20) as $R^{10}$.

The block copolymer of the invention can be manufactured by conventional methods. In such case, the structural unit having the structure represented by formula (1) can be derived by using a (meth)acrylic monomer having -NCO or protected -NCO as the precursor. Examples of such monomer may include 2-isocyanatoethyl acrylate (Karenz (registered trademark) AOI), 2-[(3,5-dimethylpyrazolyl)carbamoyl]ethyl acrylate, 2-(O-(1'-methylpropylideneamino)carboxyamino) ethyl acrylate, 2-isocyanatoethyl methacrylate (Karenz (registered trademark) MOI), 2-((3,5-dimethylpyrazolyl)carbamoyl]ethyl methacrylate (Karenz (registered trademark) MOI-BP), and 2-(O-(1'methylpropylideneamino)carboxyamino) ethyl methacrylate (Karenz (registered trademark) MOI-BM). "Karenz" is the name of a product manufactured by Resonac Corporation.

In the text, "(meth)acrylic" means acrylic or methacrylic, "(meth)acrylate" means acrylate or methacrylate, and "(meth) acryloyloxy" means acryloyloxy or methacryloyloxy.

The method of obtaining a precursor by block copolymerization using the (meth)acrylic monomer having -NCO or protected -NCO, and then converting the precursor to the structure represented by formula (1) is preferable as the manufacturing method for the block copolymer of the invention because of the ease of manufacture. At this time, to avoid gelation during polymerization, it is preferable to use a (meth)acrylic monomer having protected -NCO as a raw material. For block copolymerization, conventional methods such as the atom transfer radical polymerization (ATRP) polymerization method, the nitroxide-mediated radical polymerization (NMP) polymerization method, and the reversible addition-fragmentation chain transfer (RAFT) polymerization method can be used. Such conventional techniques may include methods described in Precision Radical Polymerization Guidebook (Merck), Organic Chemistry Information Journal, Vol. 56, 2016, (FUJIFILM Wako Pure Chemical Corporation), and Radical Polymerization Handbook, NTS Publishing, 2010, etc. The manufacturing method of the block copolymer of the invention is also described in detail in the following examples.

As a monomer that provides block (B) in the block copolymer of the invention, conventional (meth)acrylic acid derivatives can be used. Such conventional compounds may include alkyl (meth)acrylates having 1 to 8 carbon atoms, propargyl (meth)acrylate, allyl (meth)acrylate, cyclohexyl (meth)acrylate, 1-adamantyl (meth)acrylate, phenyl (meth) acrylate, benzyl (meth)acrylate, 2-methoxyethyl (meth)acrylate, 2-ethoxyethyl (meth)acrylate, diethylene glycol monomethyl ether (meth)acrylate, tetrahydrofurfuryl (meth)acrylate, dicyclopentanyl (meth)acrylate, isobornyl (meth)acrylate, 2-phenoxyethyl (meth)acrylate, oxotetrahydrofuran-3-yl (meth)acrylate, ethylene glycol monoacetoacetate mono(meth) acrylate, glycidyl (meth)acrylate, (3-ethyloxetan-3-yl)(meth)acrylate, 2-hydroxyethyl (meth)acrylate, hydroxypropyl (meth)acrylate, 2-hydroxybutyl (meth)acrylate, 4-hydroxyphenyl (meth)acrylate, 2-(dimethylamino)ethyl (meth)acrylate, 4-hydroxybutyl (meth)acrylate, 3-(trimethoxysilyl)propyl (meth)acrylate, 3-(triethoxysilyl)propyl (meth)acrylate, 3-(tris(trimethylsilyloxy)silyl)propyl (meth)acrylate, 3-(dimethoxy(methyl)silyl)propyl (meth)acrylate, 3-(diethoxy(methyl)silyl)propyl (meth)acrylate, 3-sulfopropyl potassium (meth)acrylate, 3-((2-((meth)acryloyloxy)ethyl)dimethylammonio)propane-1-sulfonic acid, (meth)acrylic acid, (meth)acrylamide, N-(hydroxymethyl)acrylamide, and the like.

As the monomer that provides block (B) in the block copolymer of the invention, conventional styrene derivatives can be used. Such conventional compounds may include styrene, $\alpha$-methylstyrene, styrene in which 1 to 3 hydrogens of the benzene ring are replaced with methyl, 2- and 4-acetoxystyrene, 4-methoxystyrene, 4-carboxystyrene, trimethoxy(4-vinylphenyl)silane, sodium 4-vinylbenzenesulfonate, and the like

As the monomer that provides block (B) in the block copolymer of the invention, acrylonitrile, vinylpyridine, N-vinylpyrrolidinone, and 1-vinylimidazole can also be suitably used.

As the monomer that provides block (B), in order to improve coatability and adhesion to the coating targets such as base materials while maintaining liquid repellency, it is preferable to select methyl (meth)acrylate, ethyl (meth)acrylate, propyl (meth)acrylate, 2-methoxyethyl (meth)acrylate, 2-ethoxyethyl (meth)acrylate, diethylene glycol monomethyl ether (meth)acrylate, glycidyl (meth)acrylate, (3-ethyloxetan-3-yl) (meth)acrylate, 2-hydroxyethyl (meth)acrylate, hydroxypropyl (meth)acrylate, 2-hydroxybutyl (meth)acrylate, 3-(trimethoxysilyl)propyl (meth)acrylate, 3-(triethoxysilyl)propyl (meth) acrylate, 3-(tris(trimethylsilyloxy)silyl)propyl (meth)acrylate, (meth)acrylic acid, (meth)acrylamide, N-(hydroxymethyl)acrylamide, styrene, and α-methylstyrene. To obtain desired properties, the monomers may be used alone or in combination of two or more types.

In the block copolymerization using the monomers, there is no limitation on polymerization initiators, radical stabilizers (polymerization inhibitors), solvents, and the like, and conditions in the conventional precision polymerization methods can be used.

As the polymerization initiator, thermal radical polymerization initiators, photoradical polymerization initiators, and the like may be used according to the polymerization methods of the monomers. Preferred thermal radical polymerization initiators may include peroxide-based polymerization initiators such as benzoyl peroxide, diisopropyl peroxydicarbonate, t-butyl peroxy-2-ethylhexanoate, t-butyl peroxypivalate, di-t-butyl peroxide (DTBPO), t-butyl peroxydisobutyrate, and lauroyl peroxide, and azo-based polymerization initiators such as dimethyl 2,2'-azobis(2-methylpropionate) (MAIB), azobisisobutyronitrile (AIBN), and azobiscyclohexanecarbonitrile (ACN).

As commercially available peroxide-based polymerization initiators, in addition to benzoyl peroxide commercially available from various companies, examples may include the name of the product "Dicumyl Peroxide" manufactured by Tokyo Chemical Industry Co., Ltd., and the names of the products "Percumyl D, Nyper BMT, Perhexa 25Z" manufactured by NOF Corporation. As azo-based polymerization initiators, in addition to AIBN commercially available from various companies, examples may include the product names "V-40, V-50, V-59, V-65, V-70, V-501, V-601" manufactured by FUJIFILM Wako Pure Chemical Corporation. In general, azo-based polymerization initiators can be suitably used for both thermal radical polymerization and photoradical polymerization.

As photoradical polymerization initiators, there is no particular limitation, and conventional ones can be used, including 4-methoxyphenyl-2,4-bis(trichloromethyl)triazine, 2-(4-butoxystyryl)-5-trichloromethyl-1,3,4-oxadiazole, 9-phenylacridine, 9,10-benzphenazine, benzophenone/Michler's ketone mixture, hexaarylbiimidazole/mercaptobenzimidazole mixture, 1-(4-isopropylphenyl)-2-hydroxy-2-methylpropan-1-one, benzyl dimethyl ketal, 2-methyl-1-[4-(methylthio)phenyl]-2-morpholinopropan-1-one, 2,4-diethylxanthone/methyl p-dimethylaminobenzoate mixture, benzophenone/methyltriethanolamine mixture, and the like. As commercially available products, examples may include the names of products "Darocur Series 1173, 4265"and the names of products "Irgacure Series 184, 369, 500, 651, 784, 819, 907, 1300, 1700, 1800, 1850, 2959" and the like manufactured by BASF Japan Ltd.

To obtain desired properties, there is no particular limitation on the average molecular weight or the dispersion value of the block copolymer of the invention. However, to improve liquid repellency and prevent liquid repellency from deteriorating over time, the weight average molecular weight (Mw) of the block copolymer of the invention is preferably 1000 or more, and more preferably 5000 or more. To prevent the solvent solubility of the block copolymer from deteriorating, Mw is preferably 1000000 or less, and more preferably 500000 or less. The most preferred range is 10000 to 100000. The dispersion value of the average molecular weight, such as Mw/Mn that is the ratio of weight average molecular weight (Mw) to number average molecular weight (Mn), generally approaches 1 in the case where precision polymerization is performed. If polymerization is performed under the condition showing a value approaching 1, a proper block copolymer is formed. However, since the block copolymer of the invention has a large interaction between polymer chains, Mw/Mn tends to increase. Therefore, from the viewpoint of block copolymer quality, Mw/Mn is preferably 1 to 10, and more preferably 1 to 5.

The block copolymer of the invention may be manufactured by, for example, a method of individually manufacturing a homopolymer formed by structural units represented by formula (1) and other homopolymers other than that, and the homopolymers are linked. Examples of such manufacturing method may include methods described in Radical Polymerization Handbook, NTS Publishing, 2010, and the like.

The conversion from the precursor block copolymer to the structure represented by formula (1) can also be performed according to conventional methods. In the case where $Y^1$ in formula (1) is -NHCONH- in the block copolymer, the block copolymer can be obtained by reacting a commercially available or conventional compound having $-NH_2$ with the precursor block copolymer. Examples of the commercially available or conventional compounds having $- NH_2$ may include alkylamines having 6 or more carbon atoms and aniline derivatives substituted with alkyl or alkoxy. The addition amount of the compound having $-NH_2$ during the reaction is 0.8 or more in molar ratio relative to the -NCO equivalent in the block copolymer. Since the compound having $-NH_2$ reacts quantitatively with -NCO equivalent, the range is consistent with the technology of the invention. Similarly, the upper limit of the usage amount of the compound having $-NH_2$ is preferably 2.0 or less, more preferably 1.5 or less, and most preferably 1.2 or less in the molar ratio in order to facilitate the purification of the block copolymer. In the calculation, the molar ratio of -NCO equivalent contained in the block copolymer can be calculated from the usage amount of the block copolymer, the abundance ratio of the blocks in the block copolymer, and the molecular weight of the structural units containing -NCO equivalent. The abundance ratio of the blocks in the block copolymer can be determined from measurements such as $^1$H-NMR, as will be described later.

In the case of a block copolymer where $Y^1$ in formula (1) is -NHCOO-, the block copolymer can be obtained by reacting a commercially available or known compound having -OH with the precursor block copolymer. Since the reactivity of the compound having -OH with - NCO equivalent is lower than the reactivity relative to the compound having $-NH_2$, the addition amount of the compound having -OH during the reaction is preferably 1.0 or more in molar ratio relative to the

-NCO equivalent in the block copolymer. Similarly, the upper limit of the usage amount of the compound having -OH is preferably 3.0 or less, and most preferably 2.0 or less in the molar ratio in order to facilitate the purification of the block copolymer. To improve the reaction rate, it is preferable to add an urethanization catalyst to the reaction solution. Examples of the urethanization catalyst may include dibutyltin dilaurate and the like. The addition amount of the urethanization catalyst is preferably 0.1% by weight or more, and more preferably 0.5% by weight or more, relative to the weight of the block copolymer for improving reactivity. Also, in order to facilitate purification of the block copolymer, it is preferably 2% by weight or less, and more preferably 1% by weight or less, relative to the weight of the block copolymer.

The reaction temperature at the time of conversion to the structure represented by formula (1) is preferably 80°C or higher in the case of a block copolymer where $Y^1$ is -NHCONH-, so as to perform the reaction promptly. Also, the reaction temperature is preferably 120°C or lower to prevent the decomposition of the block copolymer. 100°C is the most preferable reaction temperature. Also, the higher the temperature, the shorter the time required for conversion. To achieve a sufficient conversion rate, the reaction time is preferably 30 minutes or longer at 100°C, and preferably 2 hours or shorter to prevent decomposition of the block copolymer. One hour is the most preferable reaction time. In the case of the block copolymer where $Y^1$ is -NHCOO-, a reaction temperature of 100°C or higher is preferable, so as to perform the reaction promptly. Also, the reaction temperature is preferably 140°C or lower to prevent the decomposition of the block copolymer. 120°C is the most preferable reaction temperature. Under the condition of 120°C, the reaction time is preferably 1 hour or longer to achieve a sufficient conversion rate, and preferably 8 hours or shorter to prevent decomposition of the block copolymer. 4 hours is the most preferable reaction time.

The solvent at the time of conversion to the structure represented by formula (1) can be a solvent that has no or low reactivity with the precursor block copolymer. At this time, a solvent that dissolves both the precursor block copolymer and the block copolymer of the invention is preferable. Such solvent may include hydrocarbon solvents such as toluene and xylene; ester solvents such as n-propyl acetate, butyl acetate, sec-butyl acetate, methoxybutyl acetate, amyl acetate, ethylene glycol monoethyl ether acetate, propylene glycol monomethyl ether acetate, and γ-butyrolactone; ether solvents such as tetrahydrofuran (THF), 1,4-dioxane, anisole, diethylene glycol ethyl methyl ether, diethylene glycol dimethyl ether, ethylene glycol diethyl ether, diethylene glycol diethyl ether, and dipropylene glycol dimethyl ether; and dimethylformamide, diethylformamide, dimethylacetamide, N-methyl-2-pyrrolidone, dimethyl sulfoxide, ethyl methyl carbonate, and diethyl carbonate.

The composition of the invention including the block copolymer of the invention is formed by the block copolymer of the invention, a solvent, and additives added as necessary. There is no limitation on the solvent, and the solvent can be appropriately selected from conventional solvents. At this time, it is also preferable to use a mixed solvent to maintain the solubility of the block copolymer of the invention and improve the coatability to coating targets such as base materials. As such solvents, in addition to the hydrocarbon solvents, ester solvents, and ether solvents, alcohol solvents can also be suitably used. As such solvents, in addition to the above-mentioned solvents, examples may include:

ethanol, 1-propanol, 2-propanol, n-butanol, 2-butanol, 2-ethyl-1-hexanol, benzyl alcohol, ethylene glycol, diethylene glycol, triethylene glycol, propylene glycol,
ethylene glycol monomethyl ether, ethylene glycol monoethyl ether, ethylene glycol monobutyl ether, propylene glycol monomethyl ether, propylene glycol monobutyl ether, 3-methoxy-3-methyl-1-butanol, dipropylene glycol methyl ether,
acetone, methyl ethyl ketone, methyl isobutyl ketone, diisobutyl ketone, methyl isopropyl ketone, cyclopentanone, cyclohexanone, diacetone alcohol,
ethyl acetate, isopropyl acetate, methyl lactate, ethyl lactate, dimethyl carbonate,
1,3-dioxolane,
diisopropyl ether, ethylene glycol dimethyl ether,
and water.

The composition of the invention may contain an additive. Such additive includes crosslinking agents, surfactants, emulsifiers, coupling agents, antioxidants, radical stabilizers (polymerization inhibitors), antistatic agents, and hydrolysis stabilizers.

If a crosslinking agent is added to the composition of the invention, mechanical deterioration and deterioration over time of the coating film can be prevented. As such additive, conventional low molecular weight or high molecular weight compounds can be used. At this time, as the block copolymer of the invention, a material in which a structural unit having a structure represented by formula (1-p) is introduced in block (A) is selected, and compounds having multiple functional groups such as amines, alcohols, and thiols are preferably used as crosslinking agents. Suitable examples of such crosslinking agent may include various alkylene-type diamines, polyamines, diaminobenzene, polyols, alkylene dithiols, and polythiol compounds. Among the crosslinking agents, various alkylene-type diamines, polyamines, and diaminobenzene are more preferable because the crosslinking reaction proceeds rapidly. The amino groups of such amine compounds may be protected with groups that are eliminated by heat or the like, such as t-butoxycarbonyl.

Other crosslinking agents may include polyfunctional isocyanate compounds. For example, toluene diisocyanate, diphenylmethane diisocyanate, and hexamethylene diisocyanate. At this time, the polyfunctional isocyanate compounds may be -NCO protected. To cause a crosslinking reaction with the polyfunctional isocyanate compound, it is preferable to use a polymer having a functional group such as phenol or alcohol introduced therein as the block copolymer of the invention.

The amount of the crosslinking agent is preferably 30% by weight or less relative to the weight of the block copolymer of the invention in order to suppress the deterioration of liquid repellency and obtain desired effects. 1 to 20% by weight is more preferable, and 2% by weight to 10% by weight is most preferable.

A surfactant is used to improve wettability, leveling properties, and coatability to base materials. As the surfactant, silicone-based surfactants, acrylic-based surfactants, fluorine-based surfactants, and the like are used. Specifically, examples may include BYK-342, BYK-350, BYK-352, BYK-354, BYK-356, BYK-381, BYK-392, BYK-394, BYK-3441, BYK-3440, BYK-3550 (all of which are names of products manufactured by BYK Chemie Japan K.K.)
Also, as examples of the leveling agents, commercially available silicone-based surface conditioning agents can be used, such as BYK-UV3500, BYK-UV-3570 (both of which are names of products manufactured by BYK Chemie Japan K.K.), TEGO Rad2100, 2200N, 2250, 2500, 2600, 2700 (all of which are names of product manufactured by Evonik Degussa Japan Co., Ltd.), X-22-2445, X-22-2455, X-22-2457, X-22-2458, X-22-2459, X-22-1602, X-22-1603, X-22-1615, X-22-1616, X-22-1618, X-22-1619, X-22-2404, X-22-2474, X-22-174DX, X-22-8201, X-22-2426, X-22-164A, X-22-164C (all of which are names of products manufactured by Shin-Etsu Chemical Co., Ltd.). The addition amount of the surfactant to the composition is preferably 0.01 % by weight to 5% by weight, more preferably 0.05 % by weight to 1% by weight, relative to the weight of the block copolymer of the invention.

To improve the adhesion to coating targets such as base materials, the composition of the invention may contain a coupling agent. As a silane coupling agent, examples may include vinyltrialkoxysilane, 3-isocyanatepropyltriethoxysilane, N-(2-aminoethyl)3-aminopropyltrialkoxysilane, N-(1,3-dimethylbutylidene)-3-(trialkoxysilyl)-1-propanamine, 3-glycidoxypropyltrialkoxysilane, 3-chlorotrialkoxysilane, 3-acryloxypropyltrimethoxysilane, 3-methacryloxypropyltrialkoxysilane. Also, in the alkoxysilanes, dialkoxymethylsilane in which one of the (three) alkoxy groups is replaced with methyl can also be used as a silane coupling agent. The silane coupling agents may be used alone or in combination of two or more. Also, the silane coupling agents may be commercially available products. The addition amount of the coupling to the composition is preferably 0.1% by weight to 5% by weight, more preferably 0.5% by weight to 1% by weight, relative to the weight of the block copolymer of the invention.

There is no limitation on the antioxidant that can be used in the invention. For example, 3,5-di(t-butyl)-4-hydroxytoluene (BHT), hydroquinone, methylene blue, diphenylpicrylhydrazyl (DPPH), phenothiazine, nitroso compounds such as N,N-dimethyl-4-nitrosoaniline, o-hydroxybenzophenone, and benzothiazine derivatives of 2H-1,3-benzothiazine-2,4-(3H)dione. Also, examples may also include ADEKA STAB AO-20, AO-30, AO-40, AO-50, AO-60, and AO-80 sold by ADEKA Corporation, Sumilizer BHT, Sumilizer BBM-S, and Sumilizer GA-80 sold by Sumitomo Chemical Co., Ltd., and Irganox1076, Irganox1010, Irganox3114, and Irganox245 (all product names) sold by BASF Japan Ltd. The antioxidants may be used alone or in combination of two or more. Also, the antioxidants may be commercially available products.

UV absorbers, light stabilizers (radical scavengers), antioxidants, and the like may be added to the composition of the invention. Examples of the UV absorber may include Tinuvin PS, Tinuvin P, Tinuvin 99-2, Tinuvin 109, Tinuvin 213, Tinuvin 234, Tinuvin 326, Tinuvin 328, Tinuvin 329, Tinuvin 384-2, Tinuvin 571, Tinuvin 900, Tinuvin 928, Tinuvin 1130, Tinuvin 400, Tinuvin 405, Tinuvin 460, Tinuvin 479, Tinuvin 5236, ADEKA STAB LA-32, ADEKA STAB LA-34, ADEKA STAB LA-36, ADEKA STAB LA-31, ADEKA STAB 1413, and ADEKA STAB LA-51. "Tinuvin" is the name of a product manufactured by BASF Japan Ltd., and "ADEKA STAB" is the name of a product manufactured by ADEKA Corporation. The UV absorbers may be used alone or in combination of two or more. Also, the UV absorbers may be commercially available products.

Examples of the light stabilizer may include Tinuvin 111FDL, Tinuvin 123, Tinuvin 144, Tinuvin 152, Tinuvin 292, Tinuvin 622, Tinuvin 770, Tinuvin 765, Tinuvin 780, Tinuvin 905, Tinuvin 5100, Tinuvin 5050, 5060, Tinuvin 5151, Chimassorb 119FL, Chimassorb 944FL, Chimassorb 944LD, ADEKA STAB LA-52, ADEKA STAB LA-57, ADEKA STAB LA-62, ADEKA STAB LA-67, ADEKA STAB LA-63P, ADEKA STAB LA-68LD, ADEKA STAB LA-77, ADEKA STAB LA-82, ADEKA STAB LA-87, name of product: Cyasorb UV-3346 manufactured by Cytec Industries, and name of product: Goodrite UV-3034 manufactured by Goodrich Corporation. "Chimassorb" is the name of a product manufactured by BASF Japan Ltd. The light stabilizers may be used alone or in combination of two or more. Also, the light stabilizers may be commercially available products.

The addition amount of the antioxidant, UV absorber, or light stabilizer to the composition is preferably 0.01% by weight to 5% by weight, more preferably 0.05% by weight to 1% by weight, respectively, based on the weight of the block copolymer of the invention.

It is also suitable to add a hydrolysis stabilizer to the composition of the invention for the purpose of suppressing the hydrolysis of polyacrylic acid esters and the like and preventing deterioration over time or due to environmental factors.

Examples of such hydrolysis stabilizer may include Carbodilite (registered trademark) manufactured by Nisshinbo Chemical Inc., Carbodista (registered trademark) manufactured by Teijin Limited, and Stabaxol (registered trademark) manufactured by LANXESS Corporation.

The liquid repellent coating material obtained from the composition of the invention can further improve the performance by creating controlled unevenness on the surface thereof when the liquid repellent coating material is adopted as a film. As one such method, self-aggregates formed by the liquid repellent coating material obtained from the composition of the invention can be utilized. That is, in the liquid repellent coating material obtained from the composition of the invention, the block copolymer forms spherical aggregates in an appropriate solution. By utilizing the spherical aggregates, the controlled unevenness can be created. In the block copolymer of the invention, a block copolymer in which $Y^1$ in formula (1) is -NHCONH- is preferable from the viewpoint of forming the aggregates.

To form spherical aggregates, it is preferable to use a mixture of a low-polarity solvent such as toluene, which is a good solvent for the liquid repellent coating material obtained from the composition of the invention, and a high-polarity solvent such as alcohol, which is a poor solvent for the liquid repellent coating material obtained from the composition of the invention. The actual improvement of the liquid repellent performance using the aggregates is described in detail in the examples.

The article of the invention having the composition of the invention coated to the surface thereof can be obtained by coating the composition to a base material and removing the solvent. Examples of the coating method may include coating methods using a dispenser, spin coating, roll coating, curtain coating, flow coating, printing, micro gravure coating, gravure coating, wire bar coating, dip coating, spray coating, meniscus coating, and inkjet.

The method for solvent removal is not particularly limited, but heat treatment is preferable. The temperature condition is not particularly limited, but in the case where the base material has a low heat resistance such as fibers or paper, sufficiently good liquid repellency can be exhibited under a mild condition of about 130°C.

The composition of the invention has little deterioration over time regarding liquid repellency and has high durability against heat, etc. On the other hand, in the case of intending to further improve the durability of liquid repellency, it is also preferable to apply a treatment to the base material in advance that assists in adhesion of the composition of the invention. Examples of the treatment may include UV ashing using ozone or plasma treatment. A method of coating an adhesive or a crosslinking agent to the base material is also preferable.

For example, in the case where a textile product serves as a base material, a treatment can be performed by adhering a crosslinking agent to and heating the textile product. Examples of the crosslinking agent may include methylol melamine and compounds having one or more isocyanate groups or blocked isocyanate groups. Subsequently, the composition of the invention is applied to the textile product and dried by heating. At this time, for improving durability, it is preferable to use the composition of the invention that contains functional groups capable of reacting with the crosslinking agent.

Examples of compounds having one or more isocyanate groups may include monoisocyanates such as butyl isocyanate, phenyl isocyanate, tolyl isocyanate, and naphthalene isocyanate; diisocyanates such as tolylene diisocyanate, diphenylmethane diisocyanate, tetramethylxylylene diisocyanate, and hydrogenated diphenylmethane diisocyanate; and trimers that are isocyanurate rings thereof, and trimethylolpropane adducts. Examples of compounds having one or more blocked isocyanate groups may include compounds in which the isocyanate groups of the compounds having isocyanate groups are protected with a blocking agent. Examples of the blocking agent used at this time may include organic blocking agents such as secondary or tertiary alcohols, active methylene compounds, phenols, oximes, and lactams, and bisulfites such as sodium bisulfite and potassium bisulfite. The crosslinking agents may be used singly or in combination of multiple types.

The treatment of textile products with a crosslinking agent can be performed, for example, by a method of immersing the textile product in a treatment solution in which the crosslinking agent is dissolved in an organic solvent as a solvent or emulsified and dispersed in water. Subsequently, the crosslinking agent is immobilized on the base material by performing a heat treatment, etc. At this time, the immobilization of the crosslinking agent may be performed before or simultaneously with treating the base material with the composition of the invention. At this time, considering simplification of processes, energy reduction, and economic efficiency, it is preferable to perform immobilization of the crosslinking agent simultaneously with the treatment to the composition of the invention. In the case of immobilizing the crosslinking agent by heating, it is preferably performed at a temperature of 110°C to 180°C for 1 minutes to 5 minutes.

The base material to which liquid repellency can be imparted by the composition of the invention is not particularly limited, and glass, metal, plastic, paper, and fiber can be suitably used. For example, the materials of textile products are not particularly limited, and examples may include polyolefin resins such as polyethylene and polypropylene, polyester resins such as polyethylene terephthalate and polylactic acid, polyamide resins such as nylon 6 and nylon 6,6, polyurethane resins, fluorine resins such as polyvinylidene fluoride and polytetrafluoroethylene, polysulfone, polyethersulfone, and cellulose materials such as cellulose and cellulose acetate. These may be used singly or in combination of two or more types.

[Examples]

Hereinafter, the invention will be described in greater detail by examples. However, the invention is not limited by the following examples.

<Measurement of weight average molecular weight (Mw) and dispersity (Mw/Mn) of polymer>

The analysis was performed by GPC measurement. The apparatus used was a high-performance liquid chromatography system manufactured by Shimadzu Corporation. The column used was two PLgel 5μm MIXED-D2 columns, which were manufactured by Agilent Technologies, connected in series, and THF was used as the solvent. For the standard reagent for average molecular weight (standard polystyrene), STANDARD SM-105 manufactured by Resonac Corporation was used.

<Confirmation of block abundance ratio of block copolymer and structural confirmation of polymer>

The determination was performed by using a nuclear magnetic resonance spectroscopy (500MHz$^1$H-NMR) manufactured by JASCO Corporation. $CDCl_3$ was used as the measurement solvent, and tetramethylsilane was used as the reference substance.

<Film observation and film thickness measurement>

The state of the prepared film was confirmed by visual observation of the film state and by using a step profiler KLA Tencor P+16 (manufactured by KLA Tencor). For film thickness, a portion of the film was scraped with a cutter, and the step difference was measured with the step profiler measurement device. For the film thickness value, the average of 5 points with different measurement locations was adopted.

<Surface tension measurement>

The measurement was performed by using a contact angle meter (PCA-1) manufactured by Kyowa Interface Science Co., Ltd. The average of 5 points with different measurement locations was taken as the value. The measurement was performed at room temperature.

<Monomer, polymerization initiator, RAFT reagent, alkylamine, alcohol, crosslinking agent, other reagents, urethanization catalyst and solvent>

The following commercial products were used.

Monomer: 2-isocyanatoethyl acrylate, methyl acrylate, 2-hydroxyethyl acrylate, 4-hydroxybutyl acrylate, n-dodecyl acrylate (all manufactured by Tokyo Chemical Industry Co., Ltd.)
Thermal radical polymerization initiator: dimethyl 2,2'-azobis(2-methylpropionate) (V-601, name of product manufactured by FUJIFILM Wako Pure Chemical Corporation)
RAFT reagent: 4-cyano-4-[[(dodecylthio)carbonothioyl]thio]pentanoic acid (manufactured by FUJIFILM Wako Pure Chemical Corporation)
Alkylamine: n-octylamine, n-dodecylamine, n-hexadecylamine (all manufactured by Tokyo Chemical Industry Co., Ltd.)
Alcohol: n-octanol, n-dodecanol, n-hexadecanol (all manufactured by Tokyo Chemical Industry Co., Ltd.)
Crosslinking agent: 1,6-diaminohexane, hexamethylene diisocyanate (all manufactured by Tokyo Chemical Industry Co., Ltd.)
Other reagents: n-hexadecane (manufactured by Tokyo Chemical Industry Co., Ltd.)
Urethanization catalyst; dibutyltin dilaurate (manufactured by Tokyo Chemical Industry Co., Ltd.),
ORGATIX (registered trademark) ZC-150 (name of product manufactured by Matsumoto Fine Chemical Co., Ltd.)
Solvent: anisole, toluene, isopropanol (all manufactured by FUJIFILM Wako Pure Chemical Corporation)

The monomer, 2-[(3,5-dimethylpyrazolyl)carbamoyl]ethyl acrylate, was synthesized by using 2-isocyanatoethyl acrylate as a raw material according to Japanese Patent No. 4879557 (Japanese Patent Application Laid-Open Publication No. 2006-151967). The compound structure was confirmed by$^1$H-NMR.

<Base material>

Glass substrate: Eagle XG (registered trademark) (the name of a product manufactured by CORNING, with a thickness of 0.5 mm) was cut into 40 mm square pieces. The surface of the substrate was cleaned with acetone and ultrapure water, dried in an oven at 120°C for 1 hour, and cooled to room temperature.

Filter paper: qualitative filter paper (No.2, ADVANTEC (registered trademark)) (name of product manufactured by Toyo Roshi Kaisha, Ltd.) was used as is.

Nonwoven fabric: Spunbond Eltas (registered trademark) (the name of a product manufactured by Asahi Kasei Corporation, basis weight 30g) was purchased and used as is.

[Example 1] Synthesis of block copolymer 1 (a block copolymer in which a block is formed by structural units containing a structural unit in which $X^1$ in formula (1) is -O-, $R^1$ is ethylene, $Y^1$ is -NHCONH-, $R^2$ is n-$C_8H_{17}$-, and $R^3$ is hydrogen, and the other block is polymethyl acrylate)

In a Schlenk tube, : 1.2238g (5.158 mmol) of 2-[(3,5-dimethylpyrazolyl)carbamoyl]ethyl acrylate, which is a monomer that provides a structural unit represented by formula (1-p) that is a precursor-derived structure before the structural unit represented by formula (1) was obtained, V-601: 5.9mg (0.026mmol), 4-cyano-4-[[(dodecylthio)carbonothioyl]thio]pentanoic acid: 13.4mg (0.0331mmol), and anisole: 3.1g were added, and freeze-degassing was performed three times by using a vacuum pump. Thereafter, with the atmosphere being arranged as N2, and the reaction was started in an oil bath at 75°C. After 45 minutes of reaction, an anisole solution of methyl acrylate (methyl acrylate: 1.89ml (20.63mmol), anisole: 1.9g) that had been freeze-degassed in the same manner as described above was added to the reaction solution using a syringe. The polymer in the reaction solution sampled at this time had an Mw of 9500 and an Mw/Mn of 1.31. Thereafter, the temperature of the oil bath was raised to 80°C, and the reaction was continued for about 4 hours. The reaction solution was cooled to room temperature and used as is for urea or urethane conversion reaction. From$^1$H-NMR measurement, the block abundance ratio (r, molar ratio, see formula below) of the structural unit represented by formula (1-p) in the sample was 0.2. The polymerization rate of methyl acrylate was 90%. The polymerization rate of methyl acrylate was determined from the abundance ratio of methyl acrylate monomer and polymer by using $^1$H-NMR.

$$r=A/(A+B)$$

A: abundance ratio determined from the integral value of $^1$H derived from the structural unit represented by formula (1-p)

B: abundance ratio determined from the integral value of $^1$H derived from polymethyl acrylate (block B)

The block abundance ratio (r, molar ratio) corresponds to the abundance ratio (molar ratio) of the structural units forming the block formed by structural units containing the structural unit represented by formula (1) relative to the structural units forming the entire block copolymer of the invention.

2g of the reaction solution was weighed, and 0.098 g (0.76 mmol) of n-octylamine was added, followed by reaction in anisole (10ml) at 100°C for 2 hours. After cooling the reaction solution to room temperature, the reaction solution was reprecipitated in heptane and stirred for 1 hour. The resulting precipitate was filtered by suction, then added to acetonitrile and stirred for 1 hour, followed by filtration. The obtained polymer powder was vacuum dried at room temperature for 8 hours. From$^1$H-NMR measurement, the conversion rate ($\alpha$, see formula below) of the protected NCO site to urea was approximately 1. The synthesized block copolymer 1 had an Mw of 53600 and an Mw/Mn of 2.26.

$$\alpha=BCP/(BCP+Pre)$$

BCP: abundance ratio determined from the integral value of $^1$H derived from the conversion site Pre: abundance ratio determined from the integral value of $^1$H derived from the protected NCO

[Example 2] to [Example 8]

Block copolymers 2 to 8 were produced in the same manner as Example 1 above, except that the type and the addition amount of alkylamine were changed. Specifically, instead of n-octylamine, n-dodecylamine was used for Examples 2, 4, 5, and 7, n-hexadecylamine was used for Examples 3 and 8, and n-octadecylamine was used for Example 6, with the addition amount changed to match the chemical equivalent in each case. The results are shown in

Table 1. Example 1 is also shown in Table 1. In Table 1, the numbers in the column of Example/Copolymer represent the numbers of the examples as well as the numbers of the block copolymers.

[Table 1] Block copolymer in which a block is formed by structural units containing a structural unit where $X^1$ in formula (1) is -O-, $R^1$ is ethylene, $Y^1$ is -NHCONH-, and $R^3$ is hydrogen, and another block is polymethyl acrylate

| Example/ Copolymer | r | $\alpha$ | $R^2$ | Mw | Mw/Mn |
|---|---|---|---|---|---|
| 1 | 0.2 | 1 | n-$C_8H_{17}$- | 53600 | 2.26 |
| 2 | 0.2 | 1 | n-$C_{12}H_{25}$- | 52800 | 1,69 |
| 3 | 0.2 | 1 | n-$C_{16}H_{33}$- | 63400 | 1.65 |
| 4 | 0.3 | 1 | n-$C_{12}H_{25}$- | 55200 | 1.68 |
| 5 | 0.5 | 1 | n-$C_{12}H_{25}$- | 64800 | 1.55 |
| 6 | 0.2 | 1 | n-$C_{18}H_{37}$- | 62100 | 1.69 |
| 7 | 0.2 | 0.9 | n-$C_{12}H_{25}$- | 52100 | 1.71 |
| 8 | 0.2 | 0.9 | n-$C_{16}H_{33}$- | 59200 | 1.66 |

[Example 9] Synthesis of block copolymer 9 (a block copolymer in which a block is formed by structural units containing a structural unit where $X^1$ in formula (1) is -O-, $R^1$ is ethylene, $Y^1$ is -NHCONH-, $R^2$ is n-$C_8H_{17}$-, and $R^3$ is hydrogen, and the other block is a block formed by structural units of methyl acrylate and 2-hydroxyethyl acrylate)

Block copolymer 9 was obtained in the same manner as Example 1, except that methyl acrylate was changed with a mixture of methyl acrylate and 2-hydroxyethyl acrylate (methyl acrylate: 1.32 ml (14.44 mmol) and 2-hydroxyethyl acrylate: 0.65 ml (6.19 mmol)). The synthesized block copolymer 9 had an Mw of 51700 and Mw/Mn of 1.81, with r being 0.2 and $\alpha$ being 1.

[Example 10] to [Example 12]

Block copolymers 10 to 12 were produced in the same manner as Example 9 above, except that the type and the addition amount of alkylamine were changed. Specifically, instead of n-octylamine, n-dodecylamine was used for Example 10, n-hexadecylamine was used for Example 11, and n-octadecylamine was used for Example 12, with the addition amount changed to match the chemical equivalent in each case. The results are shown in Table 2. Example 9 is also shown in Table 2. In Table 2, the numbers in the column of Example/Copolymer represent both the numbers of the examples and the numbers of the block copolymers.

[Table 2] Block copolymer in which a block is formed by structural units containing a structural unit where $X^1$ in formula (1) is -O-, $R^1$ is ethylene, $Y^1$ is -NHCONH-, and $R^3$ is hydrogen, and the other block is a block formed by structural units of methyl acrylate and 2-hydroxyethyl acrylate

| Example/ Copolymer | r | $\alpha$ | $R^2$ | Mw | Mw/Mn |
|---|---|---|---|---|---|
| 9 | 0.2 | 1 | n-$C_8H_{17}$- | 51700 | 1.81 |
| 10 | 0.2 | 1 | n-$C_{12}H_{25}$- | 52200 | 1.56 |
| 11 | 0.2 | 1 | n-$C_{16}H_{33}$- | 63400 | 1.93 |
| 12 | 0.2 | 1 | n-$C_{18}H_{37}$- | 62400 | 1.84 |

[Example 13] Synthesis of block copolymer 13 (a block copolymer in which a block is formed by structural units containing a structural unit where $X^1$ in formula (1) is -O-, $R^1$ is ethylene, $Y^1$ is -NHCONH-, $R^2$ is n-$C_{18}H_{37}$-, and $R^3$ is hydrogen, and the other block is a block formed by structural units of methyl acrylate and 4-hydroxybutyl acrylate)

Block copolymer 13 was obtained in the same manner as Example 1, except that methyl acrylate was changed with a mixture of methyl acrylate and 4-hydroxybutyl acrylate (methyl acrylate: 1.48 ml (16.50 mmol) and 4-hydroxybutyl acrylate 0.57 ml (4.13 mmol)). The synthesized block copolymer 13 had an Mw of 79600 and Mw/Mn of 2.21, with r being 0.2 and $\alpha$ being 1.

[Example 14] Synthesis of block copolymer 14 (a block copolymer in which a block is formed by structural units containing a structural unit where $X^1$ in formula (1) is -O-, $R^1$ is ethylene, $Y^1$ is -NHCONH-, $R^2$ is n-$C_{18}H_{37}$-, and $R^3$ is hydrogen, and the other block is a block formed by structural units of methyl acrylate and n-dodecyl acrylate)

Block copolymer 14 was obtained in the same manner as Example 1, except that methyl acrylate was changed with a mixture of methyl acrylate and n-dodecyl acrylate (methyl acrylate: 1.32 ml (10.32 mmol) and n-dodecyl acrylate 2.82 ml (10.32 mmol)). The synthesized block copolymer 14 had an Mw of 76900 and Mw/Mn of 1.93, with r being 0.2 and $\alpha$ being 1.

[Example 15] Synthesis of block copolymer 15 (a block copolymer in which a block is formed by structural units containing a structural unit where $X^1$ in formula (1) is -O-, $R^1$ is ethylene, $Y^1$ is -NHCONH-, $R^2$ is n-$C_8H_{17}$-, and $R^3$ is hydrogen, and the other block is polymethyl methacrylate)

Block copolymer 15 was obtained by the same procedure as Example 1, except that methyl acrylate was changed with 2.20 ml (20.7 mmol) of methyl methacrylate. The synthesized block copolymer 13 had an Mw of 49200 and Mw/Mn of 1.98, with r being 0.48 and $\alpha$ being 1.

[Example 16] and [Example 17]

Block copolymers 16 and 17 were produced in the same manner as Example 15 above, except that the type and the addition amount of alkylamine were changed. Specifically, instead of n-octylamine, n-dodecylamine was used for Example 16 and n-hexadecylamine was used for Example 17, with the addition amounts changed to match the chemical equivalent respectively. The results are shown in Table 3. Example 13 is also shown in Table 3. In Table 3, the numbers in the column of Example/Copolymer represent both the number of examples and the number of block copolymers.

[Table 3] Block copolymers including a block formed by structural units containing a structural unit where $X^1$ in formula (1) is -O-, $R^1$ is ethylene, $Y^1$ is -NHCONH-, and $R^3$ is hydrogen, and the other block is polymethyl methacrylate

| Example/ Copolymer | r | $\alpha$ | $R^2$ | Mw | Mw/Mn |
|---|---|---|---|---|---|
| 15 | 0.48 | 1 | n-$C_8H_{17}$- | 49200 | 1.98 |
| 16 | 0.48 | 1 | n-$C_{12}H_{25}$- | 48700 | 1,90 |
| 17 | 0.48 | 1 | n-$C_{16}H_{33}$- | 55200 | 1.77 |

[Example 18] Synthesis of block copolymer 18 (a block copolymer in which a block is formed by structural units containing a structural unit where $X^1$ in formula (1) is -O-, $R^1$ is ethylene, $Y^1$ is -NHCOO-, $R^2$ is n-$C_8H_{17}$-, and $R^3$ is hydrogen, and the other block is polymethyl acrylate)

Example 18 was obtained by functional group conversion using the precursor block copolymer synthesized according to Example 1. Specifically, 2 g of the reaction solution of the precursor block copolymer was weighed, and 0.16 g (1.2 mmol) of n-octanol and 7.5 mg (0.012 mmol) of dibutyltin dilaurate were added, followed by reaction in anisole (5 ml) at 120°C for 8 hours. After cooling the reaction solution to room temperature, the solution was reprecipitated in heptane and stirred for 1 hour. The resulting precipitate was filtered by suction, then added to acetonitrile and stirred for 1 hour, followed by filtration. The obtained polymer powder was vacuum dried at room temperature for 8 hours. From $^1$H-NMR measurement, the conversion rate ($\alpha$) of the protected NCO sites to urethane was approximately 0.8. The synthesized block copolymer 18 had an Mw of 48500 and Mw/Mn of 1.85.

[Example 19] and [Example 20]

Block copolymers 19 and 20 were produced in the same manner as Example 18 above, except that the type and the addition amount of alcohol were changed. Specifically, instead of n-octanol, n-dodecanol was used for Example 19 and n-hexadecanol was used for Example 20, with the addition amounts changed to match the chemical equivalent respectively. The results are shown in Table 4. Example 18 is also re-listed in Table 4. In Table 4, the numbers in the column of Example/Copolymer represent both the numbers of examples and the numbers of block copolymers.

[Table 4] Block copolymers including a block formed by structural units containing a structural unit where $X^1$ in formula (1) is -O-, $R^1$ is ethylene, $Y^1$ is -NHCOO-, and $R^3$ is hydrogen, and the other block is polymethyl acrylate

| Example/ Copolymer | r | $\alpha$ | $R^2$ | Mw | Mw/Mn |
|---|---|---|---|---|---|
| 18 | 0.2 | 0.8 | n-$C_8H_{17}$- | 48500 | 1.85 |
| 19 | 0.2 | 0.8 | n-$C_{12}H_{25}$- | 55500 | 1.81 |
| 20 | 0.2 | 0.8 | n-$C_{16}H_{33}$- | 48400 | 2.11 |

[Example 21]

Synthesis of block copolymer 21 (a block copolymer in which a block is formed by structural units containing a structural unit where $X^1$ in formula (1) is -O-, $R^1$ is ethylene, $Y^1$ is -NHCONH-, $R^2$ is n-$C_{18}H_{37}$-, and $R^3$ is hydrogen, and the other block is polystyrene)

Block copolymer 21 was obtained in the same manner as Example 1, except that 2.36 ml (20.6 mmol) of styrene was changed instead of methyl acrylate. The synthesized block copolymer 21 had an Mw of 46700 and Mw/Mn of 2.37, with r being 0.7 and $\alpha$ being 1.

[Example 22] Preparation of composition 1

0.25 g of block copolymer 1 obtained in Example 1 was dispensed into a sample bottle, 1.50 g of toluene was added, and the mixture was dissolved by heating. 0.75 g of isopropanol was added to the solution to obtain composition 1, which was a polymer solution with a concentration of 10% by weight.

[Examples 23] to [Example 41] Preparation of compositions 2 to 21

By using the block copolymers synthesized in the above examples, compositions 2 to 21, which were polymer solutions with a concentration of about 10% by weight, were prepared in the same manner as Example 22 (Table 5). At this time, the respective compounds as the crosslinking agent and urethanization catalyst were added to the composition at the respective addition amounts described in Table 5 after preparing the polymer solutions. The addition was performed at room temperature. Example 22 is also shown again in Table 5.

[Table 5] Prepared compositions

| Example | Composition | Block copolymer | Crosslinkine agent/addition amount |
|---|---|---|---|
| 22 | 1 | 1 | n.a. |
| 23 | 2 | 2 | n.a. |
| 24 | 3 | 3 | n.a. |
| 25 | 4 | 4 | n.a. |
| 26 | 5 | 5 | n.a. |
| 27 | 6 | 6 | n.a. |
| 28 | 7 | 7 | 1,6-diaminohexane/1.2mg |
| 29 | 8 | 8 | 1,6-diaminohexane/1.2mg |
| 30 | 9 | 9 | n.a. |
| 31 | 10 | 10 | n.a. |
| 32 | 11 | 11 | n.a. |
| 33 | 12 | 12 | n.a. |
| 34 | 13 | 13 | n.a. |
| 35 | 14 | 14 | n.a. |
| 36 | 15 | 16 | n.a. |
| 37 | 17 | 17 | n.a. |
| 38 | 18 | 11 | hexamethylene diisocyanate/50mg ORGATIX (registered trademark) ZC-150/5mg |
| 39 | 19 | 12 | hexamethylene diisocyanate/50mg Organix ORGATIX 150/5mg |
| 40 | 20 | 19 | n.a. |
| 41 | 21 | 21 | n.a. |

[Example 42] Preparation of measurement article 1 and contact angle measurement

Composition 1 was spin-coated on a glass substrate as a base material. At this time, the rotation speed of the glass substrate was 1000 rpm. The glass substrate was heated on a hot plate at 120°C for 15 minutes to remove the solvent, thereby obtaining a film made of the block copolymer of the invention. The film sample had no holes due to coating defects and was in a clean film state, exhibiting excellent coatability and adhesion to the glass substrate as the base material. FIG. 1 shows a photograph of the film prepared on the glass substrate and observed with a step gauge. The film thickness of the sample was 1.61 μm. The contact angle of hexadecane on the sample was 38.5 degrees. In this manner, an article of the invention was prepared in which a composition containing the block copolymer of the invention and a solvent was coated to a glass substrate as a base material and the solvent was removed, and the contact angle was measured by using the measurement article.

[Examples 43] to [Example 61]

Film samples were prepared on glass substrates in the same manner as Example 42, except that composition 1 was replaced with the compositions shown in the following table. The results of physical property measurements are shown in the following table. Table 5 also shows again the results of Example 42. Like Example 42, the film samples of Examples 43 to 61 did not exhibit holes due to coating defects, either, and were in a clean film state, exhibiting excellent coatability and adhesion to the glass substrate as the base material.

[Table 6] Prepared articles and contact angle measurement

| Example | Composition | Contact angle (degrees) of hexadecane | Film state | Film thickness (μm) |
|---|---|---|---|---|
| 42 | 1 | 41.6 | Good | 1.61 |
| 43 | 2 | 38.5 | Good | 1.38 |
| 44 | 3 | 44.6 | Good | 1.33 |
| 45 | 4 | 42.3 | Good | 1.58 |
| 46 | 5 | 41.1 | Good | 1.58 |
| 47 | 6 | 44.8 | Good | 1.43 |
| 48 | 7 | 42.0 | Good | 1.55 |
| 49 | 8 | 45.1 | Good | 1.38 |
| 50 | 9 | 39.1 | Good | 1.36 |
| 51 | 10 | 41.0 | Good | 1.55 |
| 52 | 11 | 45.3 | Good | 1.48 |
| 53 | 12 | 44.2 | Good | 1.67 |
| 54 | 13 | 43.6 | Good | 1.45 |
| 55 | 14 | 46.7 | Good | 1.38 |
| 56 | 16 | 41.8 | Good | 1.32 |
| 57 | 17 | 43.5 | Good | 1.56 |
| 58 | 18 | 32.4 | Good | 1.32 |
| 59 | 19 | 35.5 | Good | 1.28 |
| 60 | 20 | 35.8 | Good | 1.27 |
| 61 | 21 | 46.2 | Good | 1.75 |

[Comparative Example 1]

In the same manner as Synthesis Example 1 of Japanese Patent Application Laid-Open Publication No. 2022-159191, a polymer (homopolymer) consisting only of structural units in which $X^1$ is O, $R^1$ is ethylene, $Y^1$ is -NHCONH-, $R^2$ is n-$C_{12}H_{25}$, and $R^3$ is hydrogen in formula (1) was obtained. This polymer was made into a polymer solution in the same manner as Example 22 (homopolymer composition). With such composition, coating was performed

on a glass substrate in the same manner as Example 42, and then the solvent was removed to obtain a film. As a result of observing the film sample, holes with a diameter of about 100 μm reaching the glass substrate due to coating defects and smaller diameter shallow holes were present, showing inferior coatability and adhesion to the glass substrate as the base material. FIG. 2 shows a photograph of the film prepared on the glass substrate. The film thickness of the sample was 1.81 μm. The contact angle of hexadecane on the sample was 43.4 degrees.

[Comparative Example 2]

A random copolymer (random copolymer) was obtained in the same manner as Comparative Example 1, except that instead of using only 2-(3-n-dodecylureido)ethyl acrylate as the monomer, a monomer mixture of 2-(3-n-dodecylureido)ethyl acrylate and methyl acrylate mixed at a molar ratio of 2:8, respectively, was used, in which $X^1$ is O, $R^1$ is ethylene, $Y^1$ is NHCONH, $R^2$ is n-$C_{12}H_{25}$ in formula (1), and $R^3$ is H, $R^{10}$ is formula (20), $X^{11}$ is O, $R^{11}$ is $CH_3$ in formula (2). The polymer was made into a polymer solution in the same manner as Example 22 (random copolymer composition). Using the composition, coating was performed on a glass substrate in the same manner as Example 42. As a result of observing the film sample, similar to FIG. 1 of Example 42, there were no holes due to coating defects and the film was in a clean state, with a film thickness of 2.27 μm. On the other hand, the contact angle of hexadecane on the sample was 34.1 degrees, showing inferior liquid repellency.

[Example 62] Preparation 2 of measurement article and contact angle measurement Composition 6 obtained in Example 47 was left at room temperature overnight, and the precipitation of aggregates of the block copolymer occurred. The composition with precipitation was dripped onto a glass substrate as the base material and left at room temperature for 1 hour, resulting in a film sample 55 with an uneven surface. The contact angle of hexadecane on the sample was measured by the same method as Example 42, and the result was 87.7 degrees.

[Example 63] and [Example 64] Preparation 3 of measurement article and contact angle measurement

Filter paper as a base material was impregnated with composition 3 obtained in Example 44 or composition 6 obtained in Example 47, and each was heated in an oven at 120°C for 15 minutes to remove the solvent. The contact angles of hexadecane on the filter paper samples 56 and 57 were measured by the same method as Example 42, and the results were 64.7 and 62.2 degrees, respectively.

[Example 65] and [Example 66] Preparation 4 of measurement article and contact angle measurement

Non-woven fabrics as a base material were impregnated with composition 3 obtained in Example 44 or composition 6 obtained in Example 47, and each was heated in an oven at 100°C for 15 minutes to remove the solvent. The contact angles of hexadecane on the non-woven fabric samples 58 and 59 were measured by the same method as Example 42, and the results were 60.1 and 66.5 degrees, respectively.

As is clear from the comparison between the examples of the invention and the comparative examples, the films prepared by using the block copolymer of the invention have high liquid repellent properties and at the same time have high coatability and adhesion to coating targets.

[Industrial applicability]

Articles such as films prepared by using materials including the composition containing the block copolymer of the invention have high liquid repellent performance despite being materials that contain as little fluorine as possible. At the same time, the composition also excels in coatability and adhesion to coating targets. The technology of the invention contributes to the reduction of environmental impact and is industrially very useful.

## Claims

1. A block copolymer, wherein one block is a block containing structural units comprising a structural unit represented by formula (1), and an abundance ratio of the structural units forming the block is 0.05 to 0.7 in molar ratio relative to structural units forming an entirety of the block copolymer,

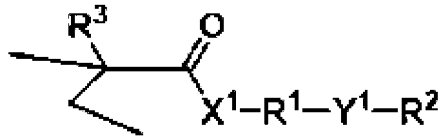

(1)

(wherein $X^1$ is -O- or -NH-, $R^1$ is alkylene having 2 to 12 carbon atoms or phenylene, $Y^1$ is -NHCOO- or -NHCONH-, $R^2$ is a linear hydrocarbon group having 6 to 30 carbon atoms, a branched hydrocarbon group having 6 to 30 carbon atoms, or a cyclic hydrocarbon group having 6 to 30 carbon atoms, the hydrocarbon group is able to contain -O- or an unsaturated bond, and in the hydrocarbon group, hydrogen on carbon atoms two or more positions away from $Y^1$ is replaceable with fluorine, and $R^3$ is hydrogen or methyl.)

**2.** The block copolymer according to claim 1, wherein $R^3$ is hydrogen.

**3.** The block copolymer according to claim 1, wherein $Y^1$ is -NHCONH-.

**4.** The block copolymer according to claim 1, wherein $R^2$ is an alkyl group having 6 to 30 carbon atoms and not containing fluorine.

**5.** The block copolymer according to claim 1, comprising, as another block, a block formed by (meth)acrylic acid ester.

**6.** A composition, comprising: the block copolymer according to any one of claims 1 to 5; and a solvent.

**7.** The composition according to claim 6, comprising a precipitate of aggregates of the block copolymer.

**8.** An article, in which the composition according to claim 6 is coated to a base material, and the solvent is removed.

**9.** An article, in which the composition according to claim 7 is coated to a base material, and the solvent is removed.

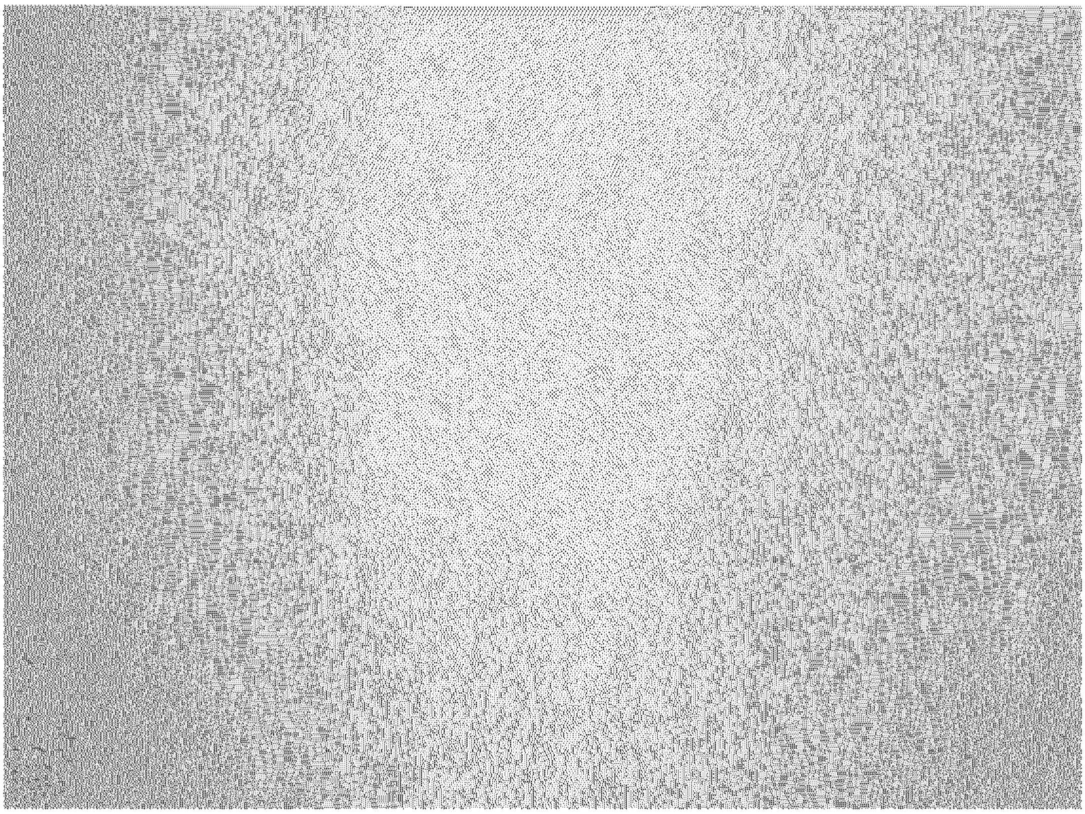

FIG. 1

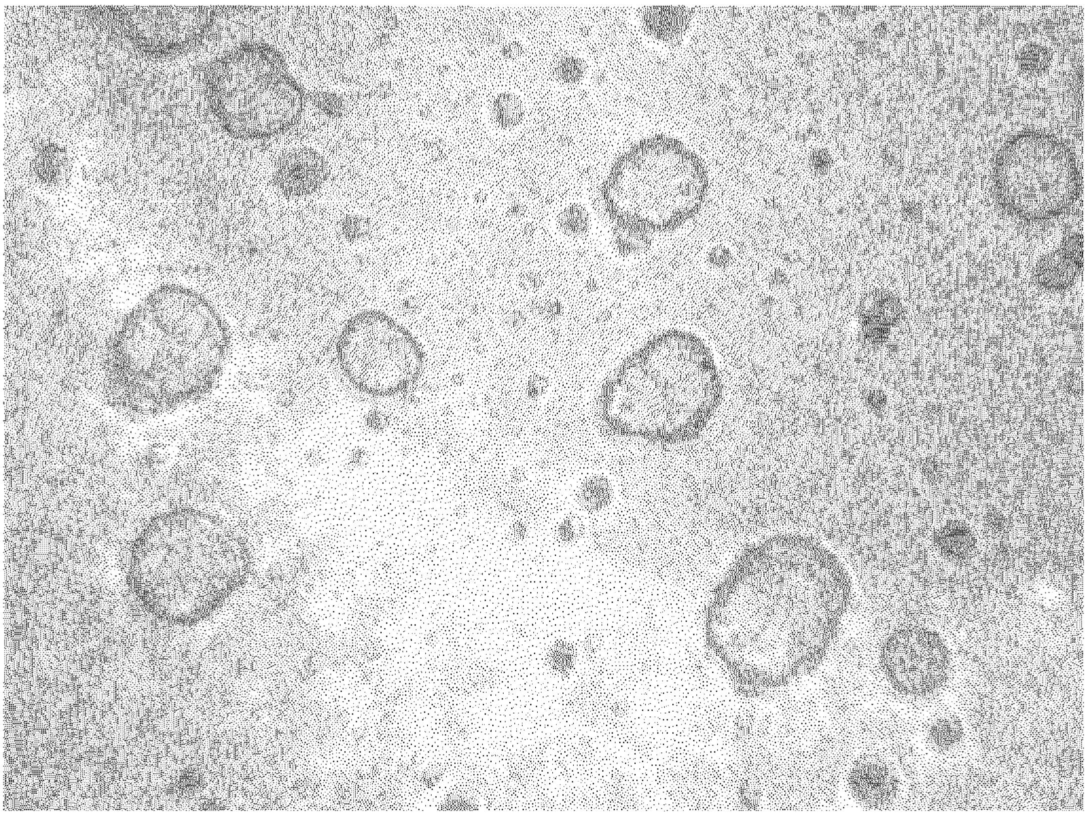

FIG. 2

# INTERNATIONAL SEARCH REPORT

International application No.
**PCT/JP2024/017799**

## A. CLASSIFICATION OF SUBJECT MATTER

***C09D 153/00***(2006.01)i; ***C08F 8/00***(2006.01)i; ***C08F 220/10***(2006.01)i; ***C09D 133/14***(2006.01)i
FI: C09D153/00; C09D133/14; C08F220/10; C08F8/00

According to International Patent Classification (IPC) or to both national classification and IPC

## B. FIELDS SEARCHED

Minimum documentation searched (classification system followed by classification symbols)

C09D153/00; C08F8/00; C08F220/10; C09D133/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X | WO 2020/067448 A1 (DAIKIN INDUSTRIES, LTD.) 02 April 2020 (2020-04-02) claims 1-15, paragraphs [0001]-[0005], [0020]-[0095], [0162]-[0231] | 1-9 |
| Y | WO 2020/196373 A1 (NOF CORPORATION) 01 October 2020 (2020-10-01) claims 1-8, paragraphs [0001]-[0010], [0017]-[0057], [0058]-[0074] | 1-9 |
| Y | JP 2022-159191 A (DAIKIN INDUSTRIES, LTD.) 17 October 2022 (2022-10-17) claims 1-14, paragraphs [0001]-[0007], [0023]-[0107], [0108]-[0137] | 1-9 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 June 2024** | **25 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/017799**

| Patent document cited in search report | Publication date (day/month/year) | Patent family member(s) | Publication date (day/month/year) |
|---|---|---|---|
| WO 2020/067448 A1 | 02 April 2020 | US 2021/0214545 A1<br>claims<br>JP 2022-82566 A<br>EP 3858881 A1<br>EP 4177396 A1<br>CN 112437783 A<br>CN 116396451 A | |
| WO 2020/196373 A1 | 01 October 2020 | CN 112996663 A | |
| JP 2022-159191 A | 17 October 2022 | EP 4317213 A1<br>claims<br>WO 2022/211135 A1<br>CN 117043200 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2022159191 A
- JP 2011523432 A

### Non-patent literature cited in the description

- In-plane oriented highly ordered lamellar structure formation of poly(N-dodecylacrylamide) induced by humid annealing. *RSC Advance*, 2017, vol. 7, 6631
- Precision Radical Polymerization Guidebook (Merck). Organic Chemistry Information Journal. FUJIFILM Wako Pure Chemical Corporation, 2016, vol. 56
- Radical Polymerization Handbook. NTS Publishing, 2010